# EUROPEAN PATENT APPLICATION

(11) **EP 4 474 809 A1**
(43) Date of publication of application: **11.12.2024**
(21) Application number: 23275087.7
(22) Date of filing: 07.06.2023
(51) Int. Cl.: G01N 29/04, G01N 29/06, G01N 29/26, G01N 29/265

(54) **PHASED ARRAY ULTRASONIC SENSING SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present disclosure relates to phased array ultrasonic sensing system. The system comprises: a phased array ultrasonic probe for sending and receiving phased array ultrasonic signals; a processor configured to generate phased array ultrasonic images using the received phased array ultrasonic signals; a display for displaying direction indications to guide a user in moving the phased array ultrasonic probe during a non-destructive evaluation of a weld of a component; and a controller configured to control the display to display the direction indications to guide the user in moving the phased array ultrasonic probe based on a position of the weld in the generated phased array ultrasonic images.

## Description

### FIELD OF THE INVENTION

The present invention relates to a phased array ultrasonic sensing systems for performing non-destructive evaluation of a weld of a component, and a method of performing non-destructive evaluation of a weld of a component using a phased array ultrasonic probe.

### BACKGROUND

Non-destructive evaluation of welds of components can be performed using a phased array ultrasonic probe. The phased array ultrasonic probe typically includes a plurality of ultrasonic transmitters and receivers to transmit ultrasonic signals and receive their reflections. The weld can be evaluated by generating images using the ultrasonic reflections if the transmitted signal is incident on the weld itself. It is therefore necessary to find an initial position for the phased array ultrasonic probe that will enable the probe to detect the weld.

One method is for a user to manually position the phased array ultrasonic probe themselves. However, it is difficult for a user to maintain position of the probe relative to the weld. Certain means have been devised e.g., using a laser to identify a position of the weld only works with simple welds and/or only if the weld has a visible weld cap protruding from the surface of the components being welded together.

### SUMMARY

Embodiments of the present invention are intended to improve on the prior art.

According to an aspect of the present invention, there is provided a phased array ultrasonic sensing system, comprising: a phased array ultrasonic probe for sending and receiving phased array ultrasonic signals; a processor configured to generate phased array ultrasonic images using the received phased array ultrasonic signals; a display for displaying direction indications to guide a user in moving the phased array ultrasonic probe during a non-destructive evaluation of a weld of a component; and a controller configured to control the display to display the direction indications to guide the user in moving the phased array ultrasonic probe based on a position of the weld in the generated phased array ultrasonic images.

In an embodiment, the controller being configured to control the display to display the direction indications to guide the user in moving the phased array ultrasonic probe based on a position of the weld in the generated phased array ultrasonic images comprises the controller being configured to: generate morphological images from the generated phased array ultrasonic images; and compare the morphological images to a weld mask including an ideal weld position relative to the phased array ultrasonic probe; and control the display to display the direction indications to guide the user to reduce a displacement between a position of the phased array ultrasonic probe and an ideal position of the phased array ultrasonic probe based on the comparison.

In an embodiment, the controller being configured to compare the morphological images to the weld mask comprises the controller being configured to determine a similarity between the morphological images and the weld mask as a function of displacement between a weld in the morphological image and the weld in the weld mask.

In an embodiment, the controller being configured to determine a similarity between the morphological images and the weld mask as a function of displacement between a weld in the morphological images and the weld in the mask comprises the controller being configured to calculate a cross-correlation function between the morphological images and the weld mask.

In an embodiment, the controller being configured to calculate a cross-correlation function between the morphological images and the weld mask comprises the controller being configured to parse the weld mask along the morphological images in a direction perpendicular to the weld and to calculate the cross-correlation function at each increment of the morphological images that are parsed.

In an embodiment, the controller being configured to control the display to display the direction indications to guide the user to reduce a displacement between a position of the phased array ultrasonic probe and an ideal position of the phased array ultrasonic probe based on the comparison comprises the controller being configured to determine a position of maximum cross-correlation in the morphological images and to measure a distance between the position of maximum cross-correlation and the ideal weld position.

In an embodiment, the generating the morphological images comprises the controller being configured to apply a plurality of steps including: normalising the phased array ultrasonic images to convert the phased array ultrasonic images into grayscale images; thresholding, using a threshold value, the grayscale images to convert the grayscale images into binary images; applying morphological opening to the binary images; applying an erosion step to the morphologically opened binary images to form a single binary object; applying dilation to the single binary object until a number of pixels is constant; and then multiplying the dilated single binary object with the thresholded binary image.

In an embodiment, the applying morphological opening to the binary images comprises applying a 3 x 3 structuring element, and optionally applying the structuring element horizontally and then vertically.

In an embodiment, the applying image dilation to the binary images comprises applying a 3 x 50 structuring element.

In an embodiment, the controller being configured to generate the morphological images comprises the controller being configured to apply a further plurality of steps after applying the plurality of steps, the further plurality of steps including: normalising the phased array ultrasonic images to convert the phased array ultrasonic images into grayscale images; thresholding, using a different threshold value than the threshold value of the plurality of step, the grayscale images to convert the grayscale images into binary imaged; applying morphological opening to the binary images; applying an erosion step to the morphologically opened binary images to form a single binary object; applying dilation to the single binary object until a number of pixels is constant; and then multiplying the dilated single binary object with the thresholded binary image.

In an embodiment, the controller being configured to generate the morphological images comprises the controller being configured to combine the plurality of steps with the further plurality of steps.

In an embodiment, the direction indications include a plurality of coloured lights, and/or wherein the direction indications include a plurality of arrows indicating a direction to move the phased array ultrasonic probe.

According to an aspect of the present invention, there is provided a method of performing non-destructive evaluation of a weld of a component using a phased array ultrasonic probe, the method comprising: sending and receiving, using a phased array ultrasonic probe, phased array ultrasonic signals; generating phased array ultrasonic images using the received phased array ultrasonic signals; displaying, by a display, direction indications to guide a user of the phased array ultrasonic probe in moving the phase array ultrasonic probe based on a position of the weld in the generated phased array ultrasonic images.

In an embodiment, the displaying, by a display, direction indications to guide a user of the phased array ultrasonic probe in moving the phase array ultrasonic probe based on a position of the weld in the generate images comprises: generating morphological images from the generated phased array ultrasonic images; comparing the morphological images to a weld mask including an ideal weld position relative to the phased array ultrasonic probe; and displaying the direction indications to guide the user to reduce a displacement between a position of the phased array ultrasonic probe and an ideal position of the phased array ultrasonic probe based on the comparison.

In an embodiment, the comparing the morphological images to the weld mask comprises the controller being configured to determine a similarity between the morphological images and the weld mask as a function of displacement between a weld in the morphological image and the weld in the weld mask.

In an embodiment, the determining a similarity between the morphological images and the weld mask as a function of displacement between a weld in the morphological image and the weld in the mask comprises calculating a cross-correlation function between the morphological images and the weld mask.

In an embodiment, the calculating a cross-correlation function between the morphological images and the weld mask comprises parsing the weld mask along the morphological images in a direction perpendicular to the weld and calculating the cross-correlation function at each increment of the morphological images that are parsed.

In an embodiment, the displaying the direction indications to guide the user to reduce a displacement between a position of the phased array ultrasonic probe and an ideal position of the phased array ultrasonic probe based on the comparison comprises determining a position of maximum cross-correlation in the morphological images and measuring a distance between the position of maximum cross-correlation and the ideal weld position.

In an embodiment, the generating the morphological images comprises applying a plurality of steps including: normalising the phased array ultrasonic images to convert the phased array ultrasonic images into grayscale images; thresholding, using a threshold value, the grayscale images to convert the grayscale images into binary imaged; applying morphological opening to the binary images; applying an erosion step to the morphologically opened binary images to form a single binary object; applying dilation to the single binary object until a number of pixels is constant; and then multiplying the dilated single binary object with the thresholded binary image.

In an embodiment, the applying morphological opening to the binary images comprises applying first a 3 x 3 structuring element, and optionally applying the structuring element horizontally and then vertically.

In an embodiment, the applying image dilation to the binary images comprises applying a 3 x 50 structuring element.

In an embodiment, the generating the morphological images applying a further plurality of steps after applying the plurality of steps, the further plurality of steps including: normalising the phased array ultrasonic images to convert the phased array ultrasonic images into grayscale images; thresholding, using a different threshold value than the threshold value of the plurality of step, the grayscale images to convert the grayscale images into binary imaged; applying morphological opening to the binary images; applying an erosion step to the morphologically opened binary images to form a single binary object; applying dilation to the single binary object until a number of pixels is constant; and then multiplying the dilated single binary object with the thresholded binary image.

In an embodiment, the generating the morphological images comprises combining the plurality of steps with the further plurality of steps.

In an embodiment, the direction indications include a plurality of coloured lights, and/or wherein the direction indications include a plurality of arrows indicating a direction to move the phased array ultrasonic probe.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 shows a schematic view of a robot performing non-destructive evaluation of a weld of a component according to one or more embodiments;
Figure 2 shows two simple ultrasonic probes and their respective signal traces;
Figure 3 shows a phased array ultrasonic probe from the robot from Figure 1;
Figure 4 shows a perspective view of a component with a dressed-weld;
Figure 5 shows a side view of the component from Figure 4 at a section showing the dressed-weld;
Figure 6 shows a cross-section view of the component from Figure 4 at a position of the dressed-weld;
Figure 7 shows a phased array ultrasonic image of the dressed-weld from Figure 4 captured using the phased array ultrasonic probe from Figure 3;
Figure 8 shows a microscopic view of the parent material from the component from Figure 4;
Figure 9 shows a microscopic view of weld material from the dressed-weld from the component of Figure 4;
Figure 10 shows a microscopic view of first heat affected zone from the component in Figure 4;
Figure 11 shows a microscopic view of the second heat affected zone from the component in Figure 4;
Figure 12 shows the robot from Figure 1 during non-destructive evaluation of the dressed-weld of the component from Figure 4;
Figure 13 shows a top and side orthographic projections of a schematic diagram of the component from Figure 4;
Figure 14 shows respective phased array ultrasonic and morphological images of generated of the weld during the non-destructive evaluation;
Figure 15 shows a comparison between the morphological image from Figure 14 and a weld mask showing an ideal position of the weld compared to the robot;
Figure 16 shows a flow chart summarising a method according to one or more embodiments;
Figure 17 shows a schematic block diagram of a phased array ultrasonic sensing system according to one or more embodiments;
Figure 18 shows a schematic view of a user interface from the phased array ultrasonic sensing system of Figure 17;
Figure 19 shows a schematic view of a user interface from the phased array ultrasonic sensing system of Figure 17; and
Figure 20 shows a flow chart summarising a method according to one or more embodiments.

### DETAILED DESCRIPTION

The present disclosure relates generally to an image processing-based localization system for remote non-destructive evaluation of welds within industrial assets. Manual ultrasonic inspection of large-scale structures is often repetitive and time consuming and benefits greatly from robotic support, however, these systems are often fixed to a single purpose, lack self-awareness, and can be limited to simple geometry. For the inspection of welds there is a reliance on the use of surface features for automated tracking such as the laser profiling of a weld cap. For the inspection of more complex geometry such as non-linear or saddle welds a more sensitive method is required. The proposed system utilizes information already available to a non-destructive inspector in the form of live phased array ultrasonic images to estimate the location of the weld using non-surface, volumetric data. Data is captured using a 64 element, 10 MHz phased array probe mounted to the end-effector of a small robotic manipulator which increases the scope of applications due to its heightened flexibility. Morphological operations are applied to the ultrasonic data to reduce the noise apparent from regions of parent material and promote the data reflected from grain boundaries within the weld material. Through a series of image processing techniques, it is possible to predict the position of a weld under inspection with a mean positional error of 0.8 mm. From this study, the localization system is to be embedded within a remote system for extensive data acquisition of welds on large structures.

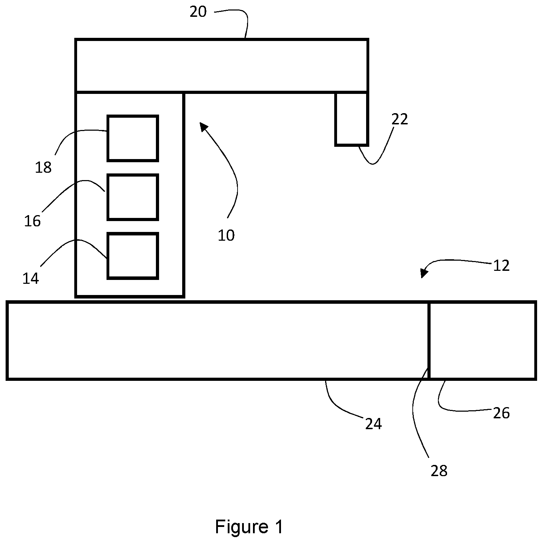

More specifically, with reference to Figure 1, the system includes a robot 10 is used to perform non-destructive evaluation of a component 12. The robot 10 includes a body mounted to the component 12, an actuator 14 for moving the phased array ultrasonic probe during non-destructive evaluation, a controller 16 configured to control the actuator to move the phased array ultrasonic probe based on a position of the weld in the generated phased array ultrasonic images to maintain a predetermined distance from the weld during the non-destructive evaluation. To move the phased array ultrasonic probe 22, the actuator 14 may be configured to move the probe 22 itself, e.g. by moving the arm, or may be configured to move the robot 10. The robot 10 also includes a processor 18, an arm 20, a phased array ultrasonic probe 22. The component 12 includes a first part 24, a second part 26, and a weld 28 connecting the first part to the second part.

The role of Non-Destructive Evaluation (NDE) within industry is an increasingly crucial aspect across the renewable, oil & gas, nuclear, aerospace, and manufacturing sectors as it allows an inspector to check for internal and external defects without physically affecting the material. By implementing NDE within their workspaces companies have the added advantage of ensuring the structural integrity of parts in-service as well as having the ability to monitor the health of components and pre-empt failure before they occur unexpectedly, allowing for planned downtime to occur in a cost-effective manner.

NDE is routinely used in the manufacture of maritime vehicles due to the criticality of ensuring a sound structural condition for extending the working life of these assets and to assure the safety of those onboard.

Multiple NDE techniques exist and are utilized on site to fully assess the status of these vehicles, including: visual inspection, magnetic particle inspection, dye penetrant, ultrasonic testing (UT), electromagnetic based methods, thermography, and radiography. In many industrial settings, including maritime manufacture, UT is the method of choice due its non-hazardous application, its ability to perform volumetric inspections, and increased detection capabilities.

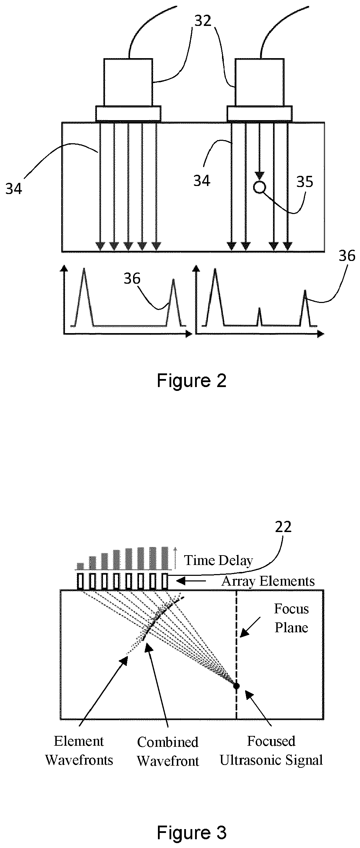

With reference to Figure 2, UT inspection often uses the pulse-echo technique which involves using the probe 32 first as a transmitter to generate a wave 34 into the material 35, then as a receiver to detect any reflections 36.

With reference to Figure 3, advanced forms of UT such as Phased Array Ultrasonic Testing (PAUT) uses multiple sources (elements) fired in a specific sequence to form concentrated waves into the material in a set direction or to focus on a particular location. This flexibility allows for high accuracy, bulk imaging in a shorter time than expected when compared to other NDE methods or conventional UT. The probe 22 of Figure 1 is a phased array ultrasonic probe using the techniques shown in Figure 3.

For the investigation of butt welded structural steel plates, the use of PAUT allows an inspector to capture data faster than previously possible with single element transducers. They can be further supported through robotic systems scaling from large fixed setups to smaller teleoperated ariel and surface dwelling solutions. Large scale industrial settings typically see the implementation of robotic crawlers to conduct remote inspection in unreachable or confined areas to reduce the time to inspect the material and improve the health and safety of the inspector. Current on-the-market products are often built for a specific purpose and maintain the need for an operator to control and position the crawler appropriately, although weld profile trackers are available, they require the presence of a physical weld cap to function. Situations where a weld cap has been removed through grinding therefore possess a problem for such systems. The next level of remote inspection lies in the advancement of crawler autonomy and their alignment with NDE 4.0, improving their situational awareness.

The current class of autonomous inspection crawlers often suffer from poor positional accuracy, especially when operating over long distances or without prior knowledge of the surrounding environment. Often these systems require substantial manual intervention and suffer a lack of general-purpose design. Steps have been taken towards full autonomy through the development of localization systems capable of navigation through measurements of the inspection material being studied, achieving sub-10 mm accuracy. A major benefit of this type of localization being that minimal assumptions are made during operation and their potential for implementation within a wide range of scenarios.

Despite this accuracy, on site procedures for conducting PAUT require a more precise probe placement for assessing welds. Usually, these inspections are conducted manually where an operator is able to adjust the probe position using a live feed of the sectorial-scan (S-scan) data as reference to ensure full coverage of the weld is achieved. This disclosure therefore presents a method of localizing a PAUT probe 22 (Figure 1) relative to a weld under inspection using the live feedback of an S-scan to predict the distance from probe to weld by using image processing techniques. The purpose of this is to complement other sensors that are used to position the crawler in an area near the weld while the post-processing of the UT data would provide finer measurements relating to the welds physical location. Long term goals aim to imbed the automated PAUT tracking within a system combining a magnetic base with a mounted robotic manipulator.

Image processing is advantageous in this scenario as it can be applied to the data already available to the NDE inspector and no additional sensors require housing on the remote base. This also minimizes the cost associated with building the system and any additional time investment configuring and integrating additional sensors. Image processing techniques have been used with NDE data in differing capacities but this has predominantly been for the identification and classification of defects for ultrasonic and other NDE methods rather than weld material. One such example of weld segmentation does exist from Provencal and Laperrière who utilized artificial intelligence (AI) with a fully convolutional network and deep learning to train a model to segment both defects and weld geometry. Although accurate and requiring minimal PAUT measurements to train the model, it is an example of an AI-generated rule-based system which will see implementation, e.g. within UK defense, in the long-term. Because regulations often lag behind the advancement of technology [24] there is a need for advanced solutions applicable for rapid deployment in the field. A human-generated rule-based system would allow this deployment by embedding expertise within a fully transparent process. In addition, certain industries have a lack of training material available for security reasons. Thus, the application shared in this disclosure can be applied to live in-situ measurements of welds without the need for prior training while maintaining the level necessary for accurate weld tracking.

The main contributions of this disclosure include: the implementation of image processing for live in-situ localization of structural steel welds; the development of a human-generated rule-based decision-making system for automated data acquisition; and advancements towards general-purpose multi-usage inspection solutions.

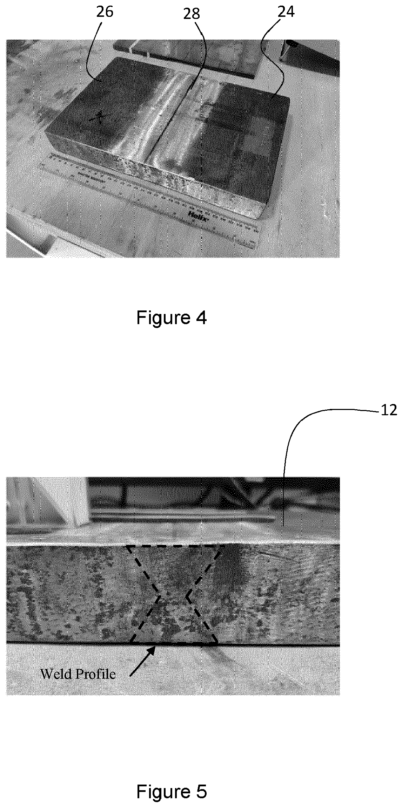

Operation of the robot 10 from Figure 1 is best described with reference to Figures 4 to 11.

A high strength NQ grade steel butt weld sample is assessed ultrasonically.

With reference to Figure 4, a component, or a sample, is a 300 x 200 x 43 mm section of plate with a double-V weld running through its centre and the weld cap removed through a series of grinding and polishing. A weld after its cap has been removed may be termed a "dressed-weld". The sample retains no discernible surface features visible to the naked eye or to a sensor due to the cap removal.

With reference to Figure 5. an elevation view of the sample is seen which also has no indication to the location of weld material, the approximate location of the weld profile is marked.

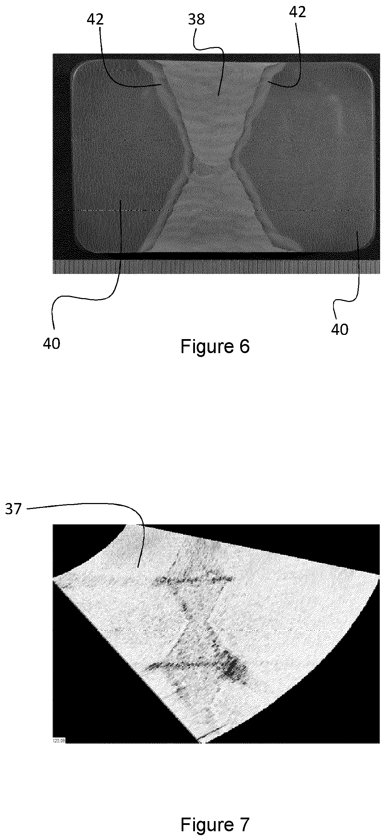

With reference to Figure 6, through cutting a section of the sample and chemical etching, a contrasting macro image of the weld is produced with highlighted features such as the weld material 38, parent material 40, and Heat Affected Zones (HAZ) 42.

In certain circumstances, it is necessary to adjust the setup of the inspection, e.g. focal laws, range, gain, filters etc., so the weld geometry is visible to the inspector.

With reference to Figure 7, an example of a sectorial scan attained from the sample is given in using a ZETEC phased array probe in pulse-echo mode with a 55° shear wave wedge. The probe details and software configuration for capturing data are shown below in Table 1. A higher frequency probe and the use of shear waves is beneficial for the application due to its increased resolution and sensitivity to signals from the weld material. The software settings also defined within the table were selected based on an optimization study ran to maximize the weld response signal to 4.75 dB when compared to the surrounding background noise.

In other words, the sectorial scan from Figure 7 may be considered to be a phased array ultrasonic image 37 generated by the processor 18 (Figure 1) using the received phased array ultrasonic signals.

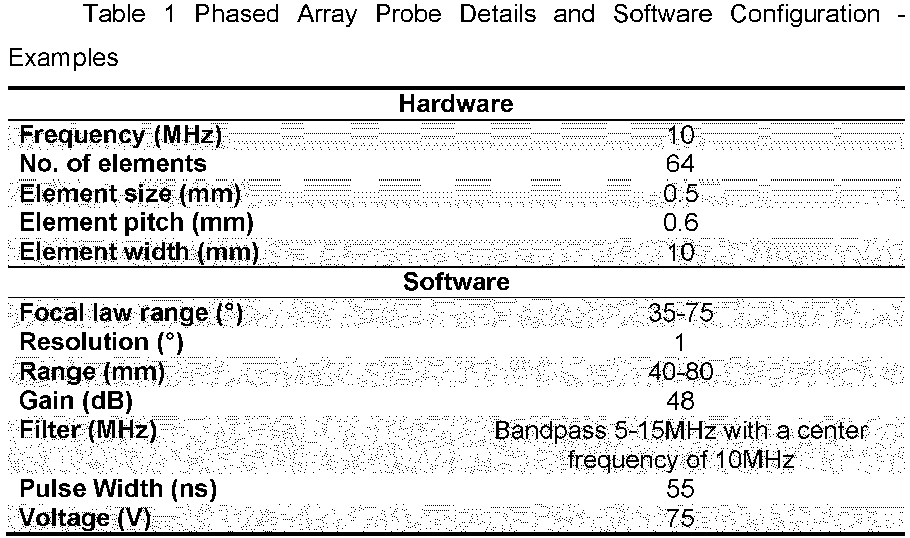

The actual mechanisms for returning an ultrasonic signal lie in a difference of microstructure between weld and parent material. During the welding process liquid metal is deposited between two plates forming a liquid pool which cools and solidifies as a welding torch passes across the sample. During this cooling period the liquid metal forms new grains in a unique columnar structure in the direction of the heat gradient. The sample assessed here is also a multi-pass weld meaning the reforming process is repeated during every pass thus a new microstructure is produced as seen in Figure 6. Faint signs of directionality are apparent but are limited in size due to the nature of carbon steel during the cooling period after welding.

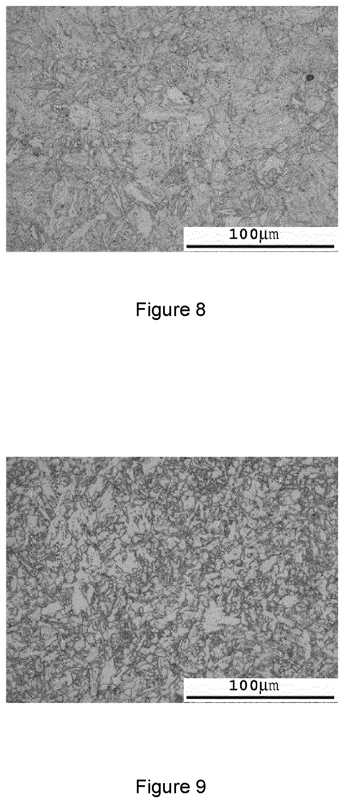

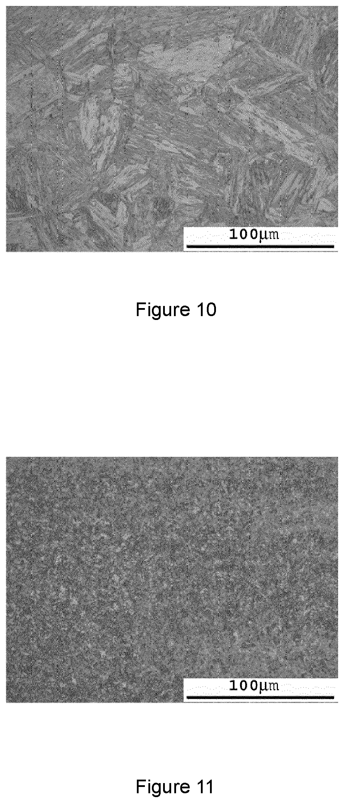

Microscopic images of the unique regions are displayed across Figure 8, Figure 9, Figure 10, and Figure 10. The parent material of Figure 8 exhibits a fine equiaxial grain structure. The structure of the weld material seen in Figure 9 is more undefined but its previously stated slight directionality and anisotropy are likely sources of the signal seen in Figure 7. HAZ 1 is formed through the extreme heating of parent material directly next to the weld pool but does not itself liquify. The high-temperature cooling that follows creates the larger, coarse, anisotropic grains of Figure 10. This particular structure would cause greater levels of attenuation than any other region of the weld and results in the darker outline of the PAUT weld profile. HAZ 2 is formed similarly to that of HAZ 1 but does not reach as high a temperature due to the distance to the weld pool. The resulting grains of Figure 11 are therefore much finer than any other region.

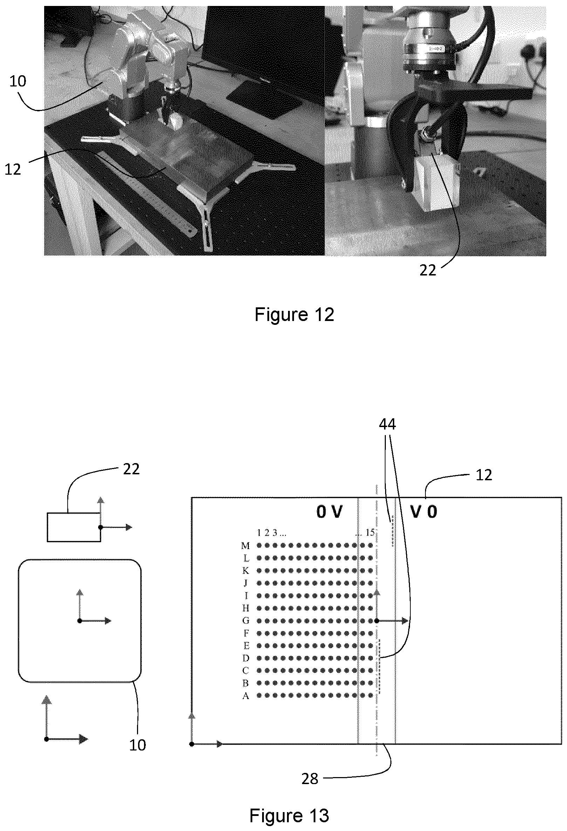

To assess the overall accuracy of the robot an array of measurements were taken from across the surface of the sample. Based on procedures for the inspection of 43 mm thick structures, the optimum probe position for attaining full-coverage of the weld has a 40 mm separation distance from the front of robot to the weld centerline. The delay laws of the array were therefore set to focus at this distance regardless of probe position. To orientate the instrument the probe and wedge were attached to a force-torque sensor and mounted to the end-effector of small robotic actuator. The sample was then aligned to the robotic actuator and the weld centerline measured relative to the world origin which is also the actuators origin. In Figure 12 the experimental setup is displayed while Figure 13 shows a topographical view of the setup including world origin, plate centerline, and measurement locations. Overall. 195 individual sectorial scans were taken across the sample and each is individually assessed by the algorithm. 15 measurements were taken in 5 mm gaps along the index axis, which is the primary axis for the weld estimation distance, ranging from -75 to -5 mm in relation to the weld origin. 13 measurements were taken in 10 mm steps along the scan axis from -60 to 60 mm, resulting in 15 measurements taken over 13 different sections of sample to ensure the image morphology is robust across a range of data. Included in these sections are two separate defects in the form of cracking 44 along the fusion faces, the locations of which are included in Figure 11.

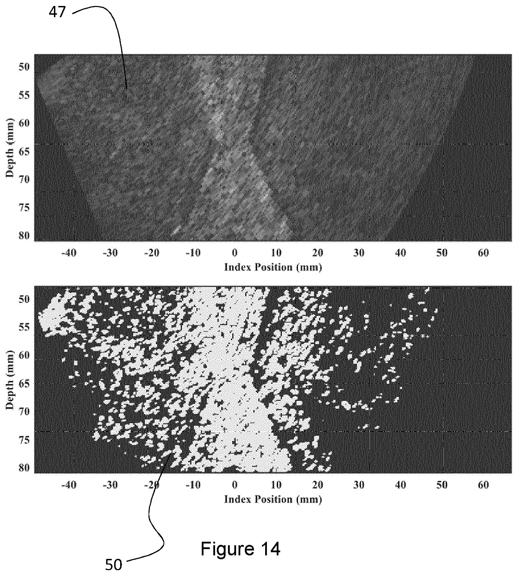

With reference to Figure 14, the controller is configured to generate morphological images 50 from the generated phased array ultrasonic images 47.

The goal of applying morphological operations on the PAUT data is to minimize the presence or influence of signals received from areas outside of the weld material on the estimation of weld position. These operations are applied through a series of eroding and dilating pixels within a binary image to remove the noise from parent material and encourage growth within the weld region. The steps are detailed below;
- The data is normalized to convert the ultrasonic image into a greyscale image.
- Thresholding is then applied to convert the greyscale image into a binary image.
- Morphological opening is applied in two stages using small, linear structuring elements. First with a horizontal element, followed by a vertical element.
- A further erosion step is conducted until a single binary object is formed.
- A final dilation step is then applied using a large rectangular element.

In other words, the generating the morphological images comprises the controller being configured to apply a plurality of steps including:
- normalising the phased array ultrasonic images to convert the phased array ultrasonic images into grayscale images;
- thresholding, using a threshold value, the grayscale images to convert the grayscale images into binary images;
- applying morphological opening to the binary images;
- applying an erosion step to the morphologically opened binary images to form a single binary object;
- applying dilation to the single binary object until a number of pixels is constant; and
- then multiplying the dilated single binary object with the thresholded binary image.

In some embodiments, the applying morphological opening to the binary images comprises applying first a 3 x 3 structuring element, and optionally applying the structuring element horizontally and then vertically.

Alternatively, the applying image dilation to the binary images comprises applying a 3 x 50 structuring element.

In some embodiments, the controller being configured to generate the morphological images comprises the controller being configured to apply a further plurality of steps after applying the plurality of steps, the further plurality of steps including:
- normalising the phased array ultrasonic images to convert the phased array ultrasonic images into grayscale images;
- thresholding, using a different threshold value than the threshold value of the plurality of step, the grayscale images to convert the grayscale images into binary imaged;
- applying morphological opening to the binary images;
- applying an erosion step to the morphologically opened binary images to form a single binary object;
- applying dilation to the single binary object until a number of pixels is constant; and
- then multiplying the dilated single binary object with the thresholded binary image.

In some embodiments, the controller being configured to generate the morphological images comprises the controller being configured to combine the plurality of steps with the further plurality of steps.

In other words, the process described above is repeated twice on the same scan using different threshold values. A high threshold results in a lower number of pixels within the binary image but are more likely to be located within the weld region. A lower threshold produces a larger binary image but is more likely include the parent material. By running two thresholds the results of each can be combined to maximize the binary weld.

The controller can be supported in its task by removing areas of high amplitude by setting an area of interest by cropping the data to focus solely on the full-skip region of the PAUT scan. The cropping applied in top part of Figure 14 is taken 5 mm from either surface of the weld to ensure that signals from the sample's surface are removed completely. After the morphological operations are applied the resultant binary image is shown in the bottom part of Figure 14, although some indications of the parent material remains, the pixel density associated with weld matter is much higher.

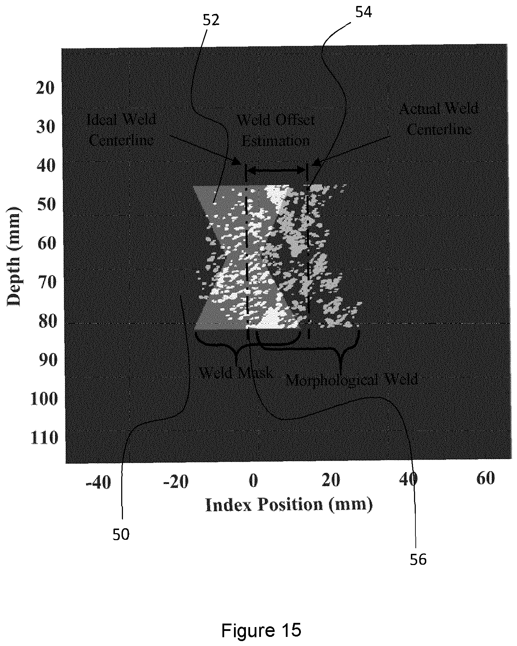

Once the morphological weld image is produced physical location of the weld can be estimated using the Cross-Correlation Function (CCF). The CCF is a signal processing and image processing technique for comparing the similarity between two data series. In the example seen in Figure 15 a weld mask is overlayed over a morphological weld image. The weld mask is a binary image representing the ideal location of the weld to achieve full coverage of the weld. The mask is parsed along the index axis of the morphological image and the correlation between the two stored at every step. The point of maximum correlation can provide an estimation of the weld position and its offset to the ideal measurement location.

With reference to Figure 15, the controller may be configured to compare the morphological images to a weld mask including an ideal weld position relative to the phased array ultrasonic probe; and control the actuator to move the phased array ultrasonic probe to reduce a displacement between a position of the phased array ultrasonic probe and an ideal position of the phased array ultrasonic probe based on the comparison.

To achieved this, the controller may be configured to determine a similarity between the morphological images and the weld mask as a function of displacement between a weld in the morphological image and the weld in the weld mask. For instance, the controller may be configured to calculate a cross-correlation function between the morphological images and the weld mask. For instance, the controller may be configured to parse the weld mask along the morphological images in a direction perpendicular to the weld and to calculate the cross-correlation function at each increment of the morphological images that are parsed. In order for the controller to be able to control the actuator to move the phased array ultrasonic probe to reduce a displacement between a position of the phased array ultrasonic probe and an ideal position of the phased array ultrasonic probe based on the comparison, the controller may be configured to determine a position of maximum cross-correlation in the morphological images and to measure a distance between the position of maximum cross-correlation and the ideal weld position.

In other words, once the morphological weld image is produced, the physical location of the weld can be estimated using the Cross-Correlation Function (CCF). The CCF is a signal processing and image processing technique for comparing the similarity between two data series. In the example seen in Figure 15, a weld mask 52 is overlayed over a morphological weld image 50. The weld mask is a binary image representing the ideal location of the weld to achieve full coverage of the weld. The mask is parsed along the index axis of the morphological image and the correlation between the two stored at every step. The point of maximum correlation (at the actual weld centerline 54) can provide an estimation of the weld position and its offset to the ideal measurement location 56.

The present invention provides a novel weld localization algorithm is detailed for the automated acquisition of PAUT data of large industrial structures with remote inspection solutions. The present invention improves the current standard of remote crawler systems in terms of their accuracy, robustness, self-awareness, and range of inspection applications. The positional accuracy of remote systems for NDT is important to ensure that data is collected in accordance with on-site procedures to minimize the chance of missing defects, a task which is made harder when operating at greater lengths. The proposed algorithm is intended to support a remote crawler's vehicle positioning system by providing fine measurements regarding the location of the inspection site. The steps to deployment are also reduced as the decision making is defined by a set of human-generated rules which are not marred by legislation. The system relies on a difference in microstructure between parent material and weld material which is created during the welding process. The solidification of liquid metal causes the growth of new small grains with many boundaries. By isolating the small reflections from these numerous grain boundaries a series of morphological operations allow for the estimation of weld location with a mean positional error of 0.8 mm.

The system is developed for the application of structures relate to maritime manufacturing but the method could be applied in a number of industries such as nuclear, oil & gas, renewables, aerospace etc.

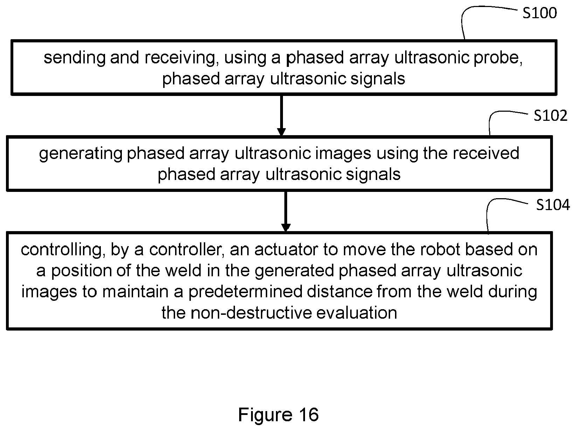

With reference to Figure 16, the foregoing methods of performing NDE of a weld of a component using the robot 10 may be summarised as including the following steps: sending and receiving S100, using a phased array ultrasonic probe, phased array ultrasonic signals; generating S102 phased array ultrasonic images using the received phased array ultrasonic signals; controlling S104, by a controller, an actuator to move the robot based on a position of the weld in the generated phased array ultrasonic images to maintain a predetermined distance from the weld during the non-destructive evaluation.

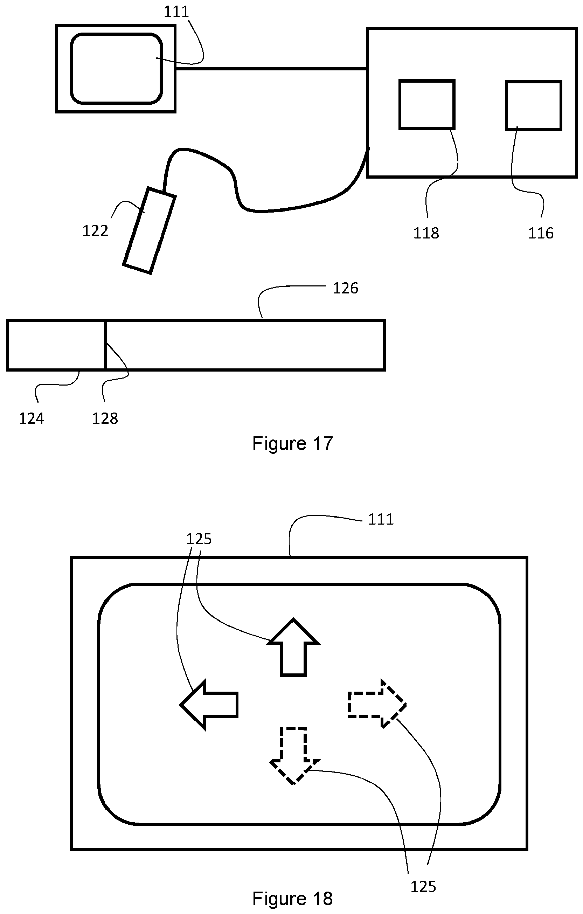

In other embodiments, the invention may be extended to cover a system such as shown in Figure 17. Features of the system 100 that are common with the features of the robot have reference signs prefixed with a 1. Any features not described below in relation to the system are taken to have the same or equivalent function as the like features of the robot.

With reference to Figure 17, a phased array ultrasonic sensing system 100 comprises a phased array ultrasonic probe 122 for sending and receiving phased array ultrasonic signals, a processor 118 configured to generate phased array ultrasonic images using the received phased array ultrasonic signals, a display 111 for displaying direction indications to guide a user in moving the phased array ultrasonic probe during a non-destructive evaluation of a weld 128 of a component 112, and a controller 116 configured to control the display to display the direction indications to guide the user in moving the phased array ultrasonic probe based on a position of the weld in the generated phased array ultrasonic images.

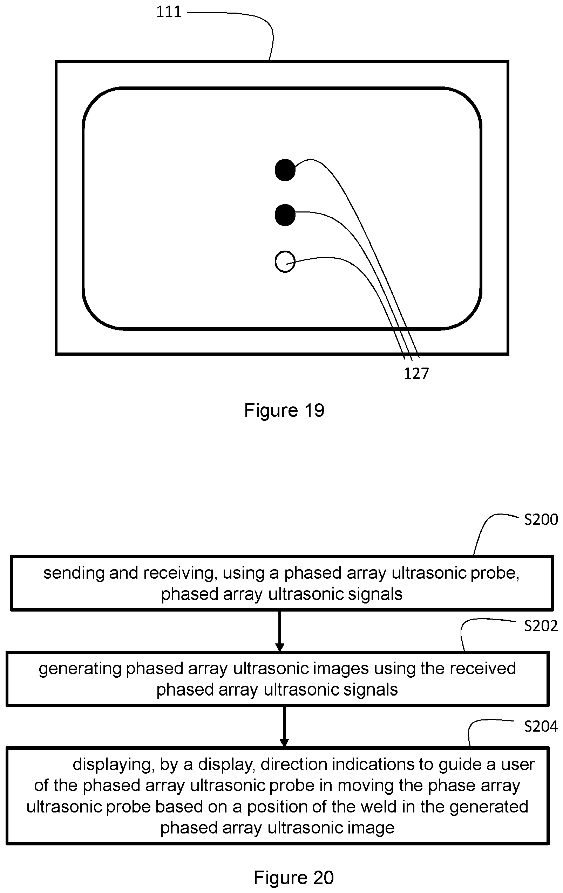

With reference to Figure 18, the direction indications include a plurality of arrows 125 indicating a direction to move the phased array ultrasonic probe 122. The direction arrows 125 may include an up arrow, a right arrow a down arrow, and a left arrow. When illuminated, or displayed, as shown in solid black lines on the display 111 in Figure 18, the arrow indicates that the probe 122 needs to move in that direction to become ideally placed relative to the weld 128. When the arrows are not illuminated, or have a lower brightness, for example, as shown by broken lines in Figure 18, the probe 122 should not be moved in that direction. Once the probe is at an ideal location for performing a complete scan of the weld 128, no arrows are illuminated. It will be appreciated that the arrows may be distinguished in other ways than by brightness, e.g. they may be coloured differently, using colours explained with reference to Figure 19 below, for example. In addition, there may be more that four or less than four direction arrows. For instance, there may instead be a circular dial having a direction indicator located on the dial to indicate which direction the probe should be moved in.

With reference to Figure 19, alternatively, the direction indications include a plurality of coloured lights 127. The light colours may be different, e.g. red, amber, and green, to indicate relative placement of the probe 122 to the weld 128. The red light may indicate that the probe 122 is too far from the weld 128 to scan the weld 128. The green light may indicate that the probe 122 is in a correct position for scanning the weld 128. The amber light may mean that the probe 122 is able to partially scan the weld 128 but is not ideally located for a complete scan of the weld.

It will be appreciated that the examples provided in Figures 18 and 19 are for illustrative purposes only and there may be other ways to provide indications on the display.

With reference to Figure 20, a method of performing NDE of a weld of a component using a phased array ultrasonic probe 122 is summarised as including the following steps: sending and receiving S200, using a phased array ultrasonic probe, phased array ultrasonic signals; generating S202 phased array ultrasonic images using the received phased array ultrasonic signals; displaying S204, by a display, direction indications to guide a user of the phased array ultrasonic probe in moving the phase array ultrasonic probe based on a position of the weld in the generated phased array ultrasonic images.

Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A phased array ultrasonic sensing system, comprising:
a phased array ultrasonic probe for sending and receiving phased array ultrasonic signals;
a processor configured to generate phased array ultrasonic images using the received phased array ultrasonic signals;
a display for displaying direction indications to guide a user in moving the phased array ultrasonic probe during a non-destructive evaluation of a weld of a component; and
a controller configured to control the display to display the direction indications to guide the user in moving the phased array ultrasonic probe based on a position of the weld in the generated phased array ultrasonic images.

2. The phased array ultrasonic sensing system of Claim 1, wherein the controller being configured to control the display to display the direction indications to guide the user in moving the phased array ultrasonic probe based on a position of the weld in the generated phased array ultrasonic images comprises the controller being configured to:
generate morphological images from the generated phased array ultrasonic images; and
compare the morphological images to a weld mask including an ideal weld position relative to the phased array ultrasonic probe; and
control the display to display the direction indications to guide the user to reduce a displacement between a position of the phased array ultrasonic probe and an ideal position of the phased array ultrasonic probe based on the comparison.

3. The phased array ultrasonic sensing system of Claim 2, wherein the controller being configured to compare the morphological images to the weld mask comprises the controller being configured to determine a similarity between the morphological images and the weld mask as a function of displacement between a weld in the morphological image and the weld in the weld mask.

4. The phased array ultrasonic sensing system of Claim 3, wherein the controller being configured to determine a similarity between the morphological images and the weld mask as a function of displacement between a weld in the morphological images and the weld in the mask comprises the controller being configured to calculate a cross-correlation function between the morphological images and the weld mask.

5. The phased array ultrasonic sensing system of Claim 4, wherein the controller being configured to calculate a cross-correlation function between the morphological images and the weld mask comprises the controller being configured to parse the weld mask along the morphological images in a direction perpendicular to the weld and to calculate the cross-correlation function at each increment of the morphological images that are parsed.

6. The phased array ultrasonic sensing system of Claim 5, wherein the controller being configured to control the display to display the direction indications to guide the user to reduce a displacement between a position of the phased array ultrasonic probe and an ideal position of the phased array ultrasonic probe based on the comparison comprises the controller being configured to determine a position of maximum cross-correlation in the morphological images and to measure a distance between the position of maximum cross-correlation and the ideal weld position.

7. The phased array ultrasonic sensing system of any of Claims 2 to 6, wherein the generating the morphological images comprises the controller being configured to apply a plurality of steps including:
normalising the phased array ultrasonic images to convert the phased array ultrasonic images into grayscale images;
thresholding, using a threshold value, the grayscale images to convert the grayscale images into binary images;
applying morphological opening to the binary images;
applying an erosion step to the morphologically opened binary images to form a single binary object;
applying dilation to the single binary object until a number of pixels is constant; and
then multiplying the dilated single binary object with the thresholded binary image.

8. The phased array ultrasonic sensing system of Claim 7, wherein the applying morphological opening to the binary images comprises applying a 3 x 3 structuring element, and optionally applying the structuring element horizontally and then vertically.

9. The phased array ultrasonic sensing system of Claim 7 or Claim 8, wherein the applying image dilation to the binary images comprises applying a 3 x 50 structuring element.

10. The phased array ultrasonic sensing system of any of Claims 7 to 9, wherein the controller being configured to generate the morphological images comprises the controller being configured to apply a further plurality of steps after applying the plurality of steps, the further plurality of steps including:
normalising the phased array ultrasonic images to convert the phased array ultrasonic images into grayscale images;
thresholding, using a different threshold value than the threshold value of the plurality of step, the grayscale images to convert the grayscale images into binary imaged;
applying morphological opening to the binary images;
applying an erosion step to the morphologically opened binary images to form a single binary object;
applying dilation to the single binary object until a number of pixels is constant; and
then multiplying the dilated single binary object with the thresholded binary image.

11. The phased array ultrasonic sensing system of Claim 10, wherein the controller being configured to generate the morphological images comprises the controller being configured to combine the plurality of steps with the further plurality of steps.

12. The phased array ultrasonic sensing system of any preceding claim, wherein the direction indications include a plurality of coloured lights, and/or wherein the direction indications include a plurality of arrows indicating a direction to move the phased array ultrasonic probe.

13. A method of performing non-destructive evaluation of a weld of a component using a phased array ultrasonic probe, the method comprising:
sending and receiving, using a phased array ultrasonic probe, phased array ultrasonic signals;
generating phased array ultrasonic images using the received phased array ultrasonic signals;
displaying, by a display, direction indications to guide a user of the phased array ultrasonic probe in moving the phase array ultrasonic probe based on a position of the weld in the generated phased array ultrasonic images.
